(19) Europäisches Patentamt
European Patent Office
Office européen des brevets

(11) **EP 2 400 584 A1**

(12) **EUROPEAN PATENT APPLICATION**
published in accordance with Art. 153(4) EPC

(43) Date of publication:
**28.12.2011 Bulletin 2011/52**

(51) Int Cl.:
*H01M 4/13* (2010.01)       *H01M 4/139* (2010.01)
*H01M 4/48* (2010.01)       *H01M 4/66* (2006.01)
*H01M 10/0562* (2010.01)   *H01M 10/0565* (2010.01)
*H01M 10/0566* (2010.01)

(21) Application number: **10743836.8**

(22) Date of filing: **19.02.2010**

(86) International application number:
**PCT/JP2010/052536**

(87) International publication number:
**WO 2010/095711 (26.08.2010 Gazette 2010/34)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **19.02.2009   JP 2009036617**
**02.07.2009   JP 2009157445**

(71) Applicant: **Nissan Motor Co., Ltd.**
**Kanagawa 221-0023 (JP)**

(72) Inventors:
• **NAGAYAMA, Mori**
  **Kanagawa  243-0123 (JP)**
• **TSUKADA, Yoshiko**
  **Kanagawa 243-0123 (JP)**
• **CHIBA, Nobutaka**
  **Kanagawa  243-0123 (JP)**

(74) Representative: **Grünecker, Kinkeldey,**
**Stockmair & Schwanhäusser**
**Leopoldstrasse 4**
**80802 München (DE)**

(54) **ELECTRICITY STORAGE DEVICE ELECTRODE AND MANUFACTURING METHOD FOR SAME**

(57)     An electrode for an electricity storage device (10) of the present invention includes a porous layer (1) having either fibers or whiskers (1a) containing tungsten oxide. A valence band photoelectron spectrum of the fibers or whiskers (1a) obtained by an X-ray photoelectron spectroscopic analysis has a peak within 1 eV from a Fermi level of the tungsten oxide.

FIG. 1

FIG. 2

**Description**

TECHNICAL FIELD

The present invention relates to an electrode for an electricity storage device and a method for manufacturing the same. More specifically, the present invention relates to an electrode for an electricity storage device including a porous layer made of fibers or whiskers containing tungsten oxide having a predetermined peak in a valence band photoelectron spectrum obtained by an X-ray photoelectron spectroscopic analysis, a method for manufacturing the same, and an electricity storage device.

BACKGROUND ART

In the conventional art, an electrode for a capacitor including a porous layer made of fibers or whiskers containing tungsten oxide composed of crystals has been suggested (for example, refer to Patent Literature 1).

CITATION LIST

PATENT LITERATURE

Patent Literature 1: Japanese Patent Unexamined Publication No. 2008-103684

SUMMARY OF INVENTION

However, the electrode described in Patent Literature does not have a sufficient performance of cycle endurance, and therefore, a further improvement has been required.

The present invention has been made in view of such a conventional problem. It is an object of the present invention to provide an electrode for an electricity storage device capable of achieving excellent performance of cycle endurance, a method for manufacturing the same, and an electricity storage device.

An electrode for an electricity storage device according to the first aspect of the present invention includes: a porous layer having either fibers or whiskers containing tungsten oxide, wherein a valence band photoelectron spectrum of the either fibers or whiskers obtained by an X-ray photoelectron spectroscopic analysis has a peak within 1 eV from a Fermi level of tungsten oxide.

An electricity storage device according to the second aspect of the present invention includes: the electrode for an electricity storage device according to the first aspect, and an electrolyte.

A method for manufacturing the electrode for an electricity storage device according to the third aspect of the present invention includes: heating a raw material or a substrate raw material including constituent metal of the fibers or whiskers in the presence of a small amount of oxygen so as to form either fibers or whiskers containing tungsten oxide

BRIEF DESCRIPTION OF DRAWINGS

[Fig. 1] Fig. 1 shows one example of an electrode for an electricity storage device according to an embodiment of the present invention. Fig. 1(a) is a partial perspective view of an electrode for an electricity storage device, and Fig. 1(b) is a cross-sectional view of an electrode for an electricity storage device.
[Fig. 2] Fig. 2 is a cross-sectional view showing another example of an electrode for an electricity storage device according to an embodiment of the present invention.
[Fig. 3] Fig. 3 is a schematic view showing an example of an electricity storage device using an electrode for an electricity storage device according to an embodiment of the present invention.
[Fig. 4] Fig. 4 is a graph showing a valence band photoelectron spectrum of a whisker surface in an electrode for an electricity storage device of each example.
[Fig. 5] Fig. 5 is a graph showing a W4f photoelectron spectrum of a whisker surface in an electrode for an electricity storage device of each example.
[Fig. 6] Fig. 6 is a graph showing a result (reflectance spectrum) according to a visible light spectroscopic analysis of whiskers in an electrode for an electricity storage device of each example.
[Fig. 7] Fig. 7 is a graph showing a result (artificial transmission spectrum) obtained by a Kubelka-Munk (K-M) conversion of Fig. 6.

[Fig. 8] Fig. 8 is a. graph showing a CV curve of an electrode for an electricity storage device of Example 2.

[Fig. 9] Fig. 9 is a graph showing a CV curve of an electrode for an electricity storage device of Example 5.

[Fig. 10] Fig. 10 is a graph showing a relation between a peak intensity ratio adjacent to a Fermi level and a battery property in Examples 6 to 10.

[Fig. 11] Fig. 11 is a graph showing a relation between a peak intensity ratio of 34 eV/36 eV and a battery property in Examples 6 to 10.

[Fig. 12] Fig. 12 is a graph showing a relation between an asymmetry index $\alpha$ and a battery property in Examples 6 to 10.

[Fig. 13] Fig. 13 is a graph showing a relation between a full width at quarter maximum of an O1s peak and a battery property in Examples 6 to 10.


DESCRIPTION OF EMBODIMENTS

An electrode for an electricity storage device, a method for manufacturing the electrode for an electricity storage device, and an electricity storage device according to the embodiment of the present invention will be explained. In the description, a "main component" is a component of which 50% by mass or more is included relative to the total amount of constituents in each member. Note that, the dimensional ratios in the drawings are exaggerated for convenience of explanation, and may be different from the actual ratios.


[Electrode for electricity storage device]


First, a specific explanation of an electrode for an electricity storage device according to the embodiment of the present invention will be made. The electrode for an electricity storage device according to the present embodiment includes a porous layer having either fibers or whiskers containing tungsten oxide. A valence band photoelectron spectrum of the fibers or the whiskers containing tungsten oxide obtained by an X-ray photoelectron spectroscopic analysis has a peak within 1 eV from a Fermi level of tungsten oxide.

When the fibers or whiskers containing tungsten oxide has a peak within 1 eV from the Fermi level in the valence band photoelectron spectrum obtained by an X-ray photoelectron spectroscopic analysis, the fibers or whiskers can achieve excellent performance of cycle endurance. The fibers or whiskers having such a peak basically contains a PC (pentagonal column) constitution or a CS (crystallographic shear) constitution as a main component caused by oxygen defects. The PC constitution is a structural change advantageous in an atmosphere with high reducing property or under high pressure, and examples thereof include $WO_7$, $W_5O_{14}$, $W_{12}O_{34}$, $W_{17}O_{47}$ and $W_{18}O_{49}$. The CS constitution is a structural change advantageous at high temperature, and the transition of the CS constitution can be controlled in a stepwise manner between $WO_{2.88}$ and $WO_3$. Examples of the CS constitution include $WO_3$, a [102] CS constitution and a [103] CS constitution. The fibers or whiskers according to the present embodiment preferably contain a $W_{18}O_{49}$ constitution as a main component. In such a case, each function of an active material and a current collector can be achieved since the peak appears sharply.

The "Fermi level" is a parameter determined from a condition in which a sum obtained by adding each f ($\varepsilon$) representing a Fermi-Dirac distribution for all $\varepsilon$ is equivalent to the total number of particles, which represents energy in which bond energy is 0. The valence band photoelectron spectrum obtained by the X-ray photoelectron spectroscopic analysis may be measured by use of an X-ray photoelectron spectroscopic analyzer. The Fermi level can be determined by subjecting a spectrum adjacent to the Fermi level to least squares fitting using a function in which a Fermi-Dirac function of a measurement temperature in consideration of an inclination of a state density is subjected to a convolution integration by a Gaussian function with regard to an energy resolution of a device. It is to be noted that when $WO_x$ is employed, gold is measured as a reference material, and it is assumed that an energy position of the Fermi level is not changed between each measurement of $WO_x$ whiskers and gold. Then, the Fermi level is determined by fitting, and the spectrum is shifted according to the determination.

The fibers preferably have an average diameter of approximately 0.01 $\mu$m to 1 $\mu$m, and a length of approximately 1 $\mu$m to 10 cm. The whiskers preferably have an average diameter of approximately 0.01 $\mu$m to 10 $\mu$m, and a length of approximately 1 $\mu$m to 1000 $\mu$m. The whiskers generally have a constitution composed only of shafts; however, the whiskers may have a branched constitution, a chenille constitution, or a fluff ball constitution. Basically, the whiskers can be formed at an arbitrary portion on the surface of the electrode for an electricity storage device as long as the original purpose of the electrode for an electricity storage device and other manufacturing processes are not inhibited due to the formation of the whiskers.

In the electrode for an electricity storage device, it is preferable, but not particularly limited to, that a rising edge of the peak of the valence band photoelectron spectrum of the fibers or whiskers obtained by an X-ray photoelectron spectroscopic analysis be started before the Fermi level of tungsten oxide. When the rising edge of the peak of the spectrum is started before the Fermi level, that is, when the rising edge of the peak appears at a lower energy side than the Fermi level, the fibers or whiskers can achieve excellent performance of cycle endurance. Furthermore, the above-mentioned fibers or whiskers exert better electrical conductivity and responsiveness.

It is preferable, but not particularly limited to, that an intensity of a peak adjacent to the Fermi level of tungsten oxide be 1/20 or more with respect to an intensity of a peak within the range of 5 to 10 eV The intensity of the peak adjacent to the Fermi level is more preferably 1/10 or more, still more preferably 1/5 or more. The peak adjacent to the Fermi level is a peak present in less than 1 eV from the Fermi level. When the intensity of the peak adjacent to the Fermi level is 1/20 or more with respect to the intensity of the peak within the range of 5 to 10 eV, more particularly, with respect to the intensity of the maximum peak adjacent to 6 eV, the electrode can ensure more favorable electrical conductivity, in addition to achieving excellent performance of cycle endurance.

In the electrode for an electricity storage device, a W4f photoelectron spectrum of the fibers or whiskers obtained by an X-ray photoelectron spectroscopic analysis preferably has, but not particularly limited to, each peak within the range of 33 to 34 eV and within the range of 35 to 36 eV. In the spectrum within the range of 33 to 40 eV showing a 4f electron state of tungsten (W), it is confirmed that a peak derived from hexahydric tungsten (W (VI)) is detected within the range of 33 to 34 eV, and a peak derived from quadrivalent tungsten (W (IV)) is detected within the range of 35 to 36 eV. Therefore, the fibers or whiskers containing tungsten oxide in which the both peaks are detected have an extremely small abundance ratio of an oxide composed only of W (VI) or W (IV) such as $WO_3$ and $WO_2$. Accordingly, the above-mentioned fibers or whiskers can exert better electrical conductivity and responsiveness, in addition to achieving excellent performance of cycle endurance.

It is preferable, but not particularly limited to, that an intensity at 34 eV of the peak within the range of 33 to 34 eV be 1/20 or more with respect to an intensity at 36 eV of the peak within the range of 35 to 36 eV. The intensity at 34 eV is more preferably 1/10 or more to 2 or less, still more preferably 1/5 or more to 1.3 or less. When the intensity at 34 eV of the peak within the range of 33 to 34 eV is 1/20 or more with respect to the intensity at 36 eV of the peak within the range of 35 to 36 eV, the electrode can ensure more favorable electrical conductivity. In addition, the intensity with 2 or less is preferable in view of an improvement in performance of cycle endurance. Moreover, when the intensity at 34 eV of the peak within the range of 33 to 34 eV is 1/10 or more with respect to the intensity at 36 eV of the peak within the range of 35 to 36 eV, better performance of cycle endurance can be achieved. Furthermore, since much better electrical conductivity and responsibility can be exerted, a rapid discharge capacity becomes large.

Further, in the electrode for an electricity storage device, a spectrum of the fibers or whiskers obtained by a Kubelka-Munk conversion of a reflectance spectrum by a visible light spectroscopic analysis preferably has, but not particularly limited to, a maximum peak within the range of 500 to 600 nm. Due to such a maximum peak within the range of 500 to 600 nm, not only the electrode can achieve better performance of cycle endurance, but also much better electrical conductivity and responsibility can be exerted. Accordingly, the electrode can have a wider potential window (wide voltage range with stability), and ensure better quality stability.

With regard to fibers available for a transmitted light analysis, a determination by a common visible light transmission spectrum is available. On the other hand, whiskers generally do not have a sufficient light transmission property. Thus, the whiskers are determined using a spectrum obtained by a Kubelka-Munk conversion of a spectrum in which reflected light from a light source is detected. The light source in this case is preferably a xenon light source or a halogen light source.

Note that, the "Kubelka-Munk conversion" is a conversion using a Kubelka-Munk (K-M) function (f ($R_\infty$). The K-M function is represented by the following formula (1).

$$f\,(R_\infty) = (1\text{-}R_\infty)^2/2R_\infty = K/S \,\ldots\ldots\ldots\,(1)$$

In the formula, $R_\infty$ represents an absolute reflectance; K represents an absorption coefficient; and S represents a scattering coefficient.

However, it is difficult to measure an absolute reflectance $R_\infty$ of a sample. Therefore, in the actual measurement, a reflection intensity ratio $r_\infty$ of a sample to standard powder such as potassium bromide (KBr) and potassium chloride (KCl) adjacent to K=0 in a measuring region is measured, so as to obtain the following formula (2). Note that, the reflection intensity ratio $r_\infty$ represents $r'_\infty$ (sample)/$r'_\infty$ (standard powder), and "$r'_\infty$ (sample)" and "$r'_\infty$ (standard powder)" represent reflection intensities of a sample and standard powder, respectively.

$$f(r_\infty) = (1-r_\infty)^2/2r_\infty = K/S \ \ldots\ldots\ldots\ (2)$$

In the formula, $r_\infty$ represents a reflection intensity ratio of a sample to standard powder; K represents an absorption coefficient; and S represents a scattering coefficient.

In the electrode for an electricity storage device, it is preferable, but not particularly limited to, that an asymmetry index $\alpha$ be 0.07 or more when a peak of the fibers or whiskers within the range of 525 to 535 eV obtained by an X-ray photoelectron spectroscopic analysis is subjected to a least squares approximation using a Doniach-Sunjic function. Note that, the peak within the range of 525 to 535 eV represents a state of Is electrons of oxygen (O). When the asymmetry index $\alpha$ is 0.07 or more, not only better performance of cycle endurance can be achieved, but also better electrical conductivity and responsibility can be exerted. In addition, a rapid discharge capacity becomes large.

The Doniach-Sunjic function is represented by the following formula (3).

[Math 1]

$$I(E) = \frac{\Gamma(1-\alpha)\cos\{\pi\alpha/2 + (1-\alpha)\arctan((E-E_0)/\gamma)\}}{[(E-E_0)^2 + \gamma^2]^{(1-\alpha)/2}}$$

*I*: XPS spectrum intensity
E: XPS energy
$E_0$: Peak position
$\Gamma$: Peak intensity
$2\gamma$: Full width at half maximum of peak ($\gamma$: half width at half maximum)
$\alpha$: Asymmetry index

This formula is a theoretical formula of a core spectrum of X-ray photoelectron spectroscopy (XPS), in which an interaction between core electrons and electrons of the Fermi level is reflected. The inventors repeated the experiments on this matter and found out that the asymmetry index $\alpha$ of this formula greatly contributes to a battery property. When the peak of XPS is subjected to least squares fitting by the Doniach-Sunjic function within the range of 525 to 535 eV corresponding to O1s electrons, each parameter can be obtained. The asymmetry index $\alpha$ representing interference between the core electrons and the electrons of the Fermi level has a strong correlation with the battery property.

Further, in the electrode for an electricity storage device, it is preferable, but not particularly limited to, that a full width at quarter maximum under the peak of the fibers or whiskers in the peak within the range of 525 to 535 eV obtained by an X-ray photoelectron spectroscopic analysis be 2.5 to 4.0 eV. When the full width at quarter maximum under the peak is 2.5 to 4.0 eV, not only the electrode can achieve better performance of cycle endurance, but also much better electrical conductivity and responsibility can be exerted. Moreover, a rapid discharge capacity becomes large.

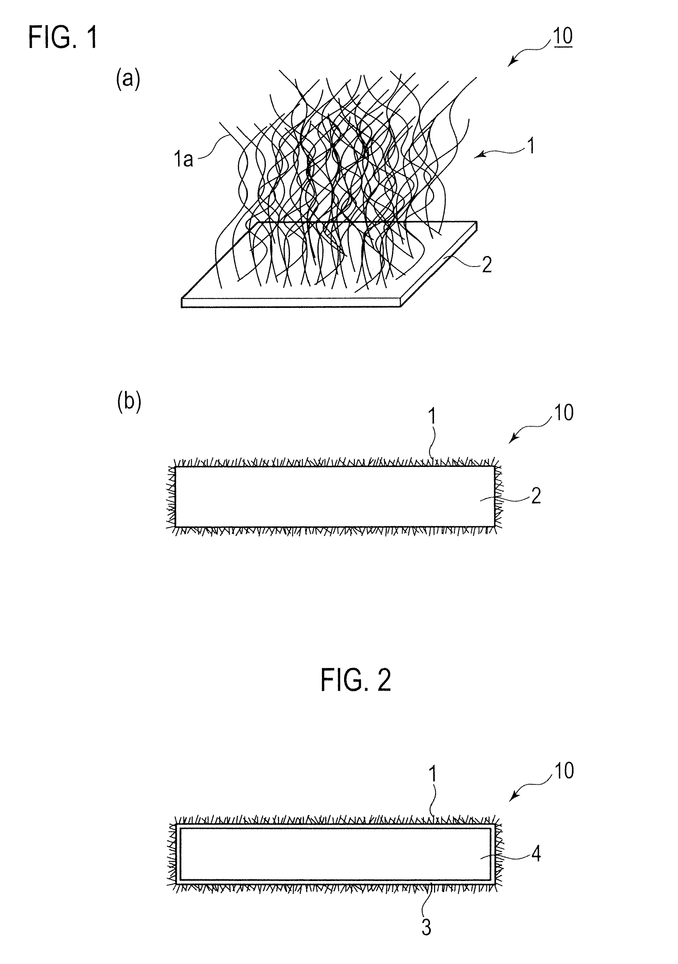

As shown in Figs. 1(a) and 1(b), an electrode for an electricity storage device 10 according to the present embodiment preferably includes a porous layer 1 that is made of either fibers or whiskers la and is provided on a substrate 2 of metal or ceramics including tungsten. Due to such a configuration, excellent performance of cycle endurance can be achieved. In addition, since adhesion between the fibers or whiskers 1a and the substrate 2 is further improved and an electrical contact is also improved, an internal resistance of the electrode can be reduced. Furthermore, excellent electrical conductivity and better responsibility can also be ensured.

The metal including tungsten is not limited to tungsten alone. Examples of the metal include alloys containing cobalt, chromium, manganese, iron, nickel, titanium, vanadium, niobium and molybdenum, in addition to metal and a metal compound composing whiskers or fibers containing tungsten oxide. That is, an alloy composed of tungsten and at least one of cobalt, chromium, manganese, iron, nickel, titanium, vanadium, niobium and molybdenum may be used. Examples of the ceramics include tungsten nitride, tungsten carbide and tungsten boride.

In addition, as shown in Fig. 2, the substrate on which the porous layer 1 made of the fibers or whiskers is formed may include a metal layer 3 containing constituent metal of the whiskers or fibers on the surface thereof. As for the constituent metal of the whiskers or fibers, tungsten may be used as in the case of the substrate 2. Namely, the metal layer 3 may include tungsten alone, or include an alloy composed of tungsten and at least one of cobalt, chromium, manganese, iron, nickel, titanium, vanadium, niobium and molybdenum. Due to the constitution in which the substrate composed of tungsten metal and the like and the whiskers composed of tungsten oxide are continuously formed, not only excellent performance of cycle endurance can be achieved, but also an electrical resistance at an interface can be decreased, and therefore, excellent electrical conductivity can be ensured. In addition, a material of other compositions having an excellent physical strength and electrical conductivity may be used as a core member 4, while adhesion between the fibers or whiskers and the substrate is maintained. As a result, an internal resistance of the electrode can be reduced, and better responsibility can be exerted. Moreover, a physical strength can be improved.

Examples of the core member 4 include metal such as iron, cobalt, nickel, niobium, molybdenum, platinum and titanium, and ceramics with a high melting point such as aluminum oxide and silicon oxide.

The substrate 2 and the core member 4 may be a porous body other than a flat plate as shown in Fig. 1(a) and Fig. 2. The substrate 2 and the core member 4 may employ various configurations such as metal mesh and foam metal other than a flat plate as long as the fibers or whiskers can be provided thereon. When a porous substrate is used, the substrate is preferably formed prior to the formation of the whiskers.

[Method for manufacturing electrode for electricity storage device]

Next, a specific explanation of a method for manufacturing the electrode for an electricity storage device will be made. In the method for manufacturing the electrode for an electricity storage device according to the present embodiment, a raw material or substrate raw material containing constituent metal of the fibers or whiskers is subjected to a heat treatment in the presence of a small amount of oxygen, so as to form the fibers or whiskers.

The raw material or substrate raw material may contain constituent metal of the whiskers or fibers. More specifically, a flat plate and a porous plate composed of tungsten may be used. Alternatively, a flat plate and a porous plate composed of an alloy of tungsten and at least one of cobalt, chromium, manganese, iron, nickel, titanium, vanadium, niobium and molybdenum may be used. Further, a flat plate and a porous plate provided with the metal layer 3 and the core member 4 shown in Fig. 2 may also be used. When such a raw material is used, an electrode in which the porous layer 1 made of the whiskers or fibers and the substrate are integrated together can be formed. Namely, adhesion between the substrate and the whiskers or fibers can be improved, and therefore, an electrode for an electricity storage device having excellent performance such as electrical conductivity and responsibility can be obtained.

In the formation of the whiskers or fibers containing tungsten oxide, the raw material is heated in the presence of a small amount of oxygen, such as under an inert gas atmosphere with an oxygen concentration of 1 to 100000 ppm by volume, preferably 100 to 10 000 ppm by volume. In this case, the heating temperature is between 800 and 1600 °C, preferably between 900 and 1200 °C, and the heating time is between 1 minute and 100 hours, preferably 1 to 10 hours. As for the inert gas, argon is preferable.

In addition, the oxygen concentration is preferably reduced in a stepwise manner or continuously. More specifically, the raw material is heated at 30 to 1100 °C for 1 minute to 100 hours while argon containing oxygen with an oxygen concentration of 100 to 10000 ppm by volume, preferably 5000 to 10000 ppm by volume, is allowed to flow into. In this case, a flow rate of argon containing oxygen is preferably 1 to 5000 cm$^3$/minute (1 atm, 25 °C). Then, while allowing pure argon to flow into, the raw material is heated at 800 to 1600 °C for 1 minute to 100 hours. Thus, the whiskers or fibers containing tungsten oxide can be formed. A flow rate of pure argon is preferably 1 to 5000 cm$^3$/minute (1 atm, 25 °C). The pure argon preferably has a purity of 99.5% or more, and more preferably has a purity of 99.99% or more. Note that, the supply of the pure argon may be stopped in the middle of the process.

As another manufacturing method, heating of the raw material in air is started, simultaneously with the supply of pure argon, followed by heating at 800 to 1600 °C for 1 minute to 100 hours, so as to form the whiskers or fibers containing tungsten oxide. In this case, a flow rate of pure argon is preferably between 10 and 5000 cm$^3$/minute (1 atm, 25 °C). That is, the raw material is placed in a reaction furnace, and thereafter heating of the raw material in air is started without deairing in the furnace. Subsequently, the temperature in the furnace is increased while supplying pure argon simultaneously with the start of heating of the raw material, and heating is kept at the above-mentioned temperature for the above-mentioned time. Thus, due to the process of continuously decreasing the oxygen concentration simultaneously with the start of heating of the raw material, followed by heating the raw material in such an oxygen concentration, the whiskers or fibers can be formed.

As still another manufacturing method, the raw material is heated at 30 to 1100 °C for 1 minute to 10 hours while argon containing oxygen with a high oxygen concentration of 2000 to 20000 ppm by volume is allowed to flow into. In this case, a flow rate of argon with such a high oxygen concentration is preferably 1 to 5000 cm$^3$/minute (1 atm, 25 °C). Then, while argon containing oxygen with a low oxygen concentration of 100 to 8000 ppm by volume is allowed to flow into, the raw material is heated at 800 to 1600 °C for 1 minute to 100 hours. Thus, the whiskers or fibers containing tungsten oxide can be formed. The oxygen concentration in argon containing oxygen with a low concentration should be below the oxygen concentration in argon containing oxygen with a high concentration. A flow rate of argon containing oxygen with a low concentration is preferably 1 to 5000 cm$^3$/minute (1 atm, 25 °C). In addition, the supply of argon containing oxygen with a low concentration may be stopped in the middle of the process.

The amount of inert gas to be introduced is determined in accordance with a size and configuration of a reaction furnace or a substrate to be used. For example, when the content of the furnace is 3 L. inert gas is preferably supplied at 0.1 to 5 L/minute.

[Electricity storage device]

Next, a specific explanation of an electricity storage device according to one embodiment of the present invention will be made. The electricity storage device according to the present embodiment includes the electrode for an electricity storage device, and an electrolyte. The electricity storage device having such a configuration can achieve excellent performance of cycle endurance.

The electrode for an electricity storage device may be applied to either a positive electrode or a negative electrode. The electrode for an electricity storage device may be used as an electrode by itself, or may be used in combination with other active materials. For example, a positive electrode may be combined with a covering layer containing an active material ensuring the content at a high potential side. In addition, a negative electrode may be combined with a covering layer containing an active material ensuring the stable content at a low potential side. Further, an identical composition may be applied to both electrodes.

The electrolyte is not particularly limited, but may be a non-aqueous electrolysis solution. The non-aqueous electrolysis solution has a higher resistance to voltage compared to an aqueous electrolysis solution. Therefore, there is an advantage of easily obtaining a large capacity. In addition, since the non-aqueous electrolysis solution has higher viscosity and lower diffusion rate compared to an aqueous electrolysis solution, there is a great advantage available in combination with the electrode for an electricity storage device in which diffusion is smoothly performed. Specific examples of the non-aqueous electrolysis solution include an organic solution and an ionic liquid.

Moreover, it is preferable to use a solid or gelled electrolyte for the electricity storage device. Such an electrolyte has the advantage of becoming manageable in a safety aspect and a cycle property aspect of a cell. In general, a solid or gelled electrolyte has lower ion conductivity compared to a liquid electrolyte. Therefore, there is a great advantage available in combination with the electrode for an electricity storage device having excellent responsibility. Specific examples of the solid or gelled electrolyte include a polymer electrolyte, a gel electrolyte and a solid acid electrolyte.

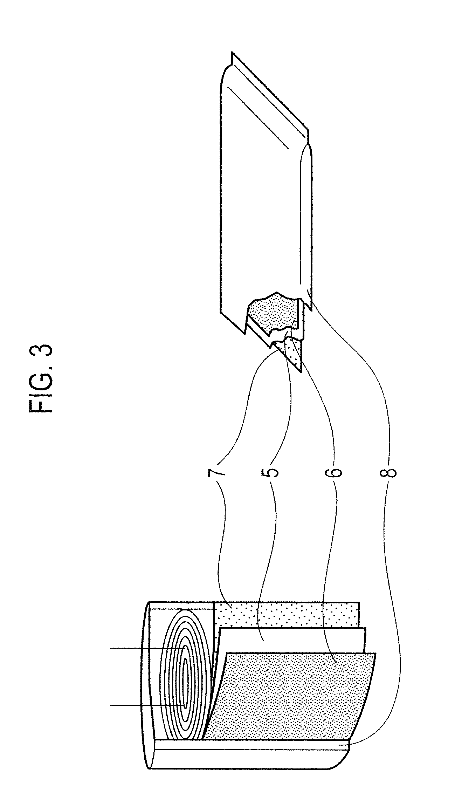

Examples of the electricity storage device include an electrochemical capacitor (electrical double layer capacitor) and a lithium ion battery. The electrode for an electricity storage device according to the present embodiment may be applied to either a positive electrode or a negative electrode of a capacitor or a lithium ion battery. Fig. 3 shows an example of an electrochemical capacitor using the electrode for an electricity storage device according to the present embodiment. Fig. 3 shows an example of a winding cell on the left side, and shows an example of a laminate cell on the right side. The electrochemical capacitor in Fig. 3 is provided with a positive electrode 6 on one side of a separator 5, and provided with a negative electrode 7 on the other side of the separator 5. A laminated body composed of the separator 5, the positive electrode 6 and the negative electrode 7 is sealed in a casing body 8 together with an electrolyte (electrolyte liquid).

EXAMPLE

Hereinafter, the present invention will be further explained in detail with reference to examples and comparative examples.

(Example 1)

First, a tungsten metal flat plate as a substrate was placed in an electric furnace capable of controlling an atmosphere. Next, while argon containing oxygen was allowed to flow into, the temperature was increased to 100 °C at a rate of temperature rise of 550 °C/hour. In this case, an oxygen concentration in the flow of argon containing oxygen was 1% by volume (10000 ppm by volume), and a flow rate was 15 cm$^3$/minute (1 atm, 25 °C). Then, argon containing oxygen was changed to pure argon. While pure argon gas was allowed to flow into, the temperature was increased to 1100 °C at a rate of temperature rise of 550 °C/hour, and kept at 1100 °C for two hours. A flow rate of pure argon gas was 15 cm$^3$/minute (1 atm, 25 °C). When the temperature reached 200 °C, the supply of pure argon gas was stopped. Thereafter, the furnace was naturally cooled to room temperature, thereby obtaining an electrode for an electricity storage device of this example. Hereinafter, the electrode of this example is referred to as a "sample 1".

When the sample 1 was visually confirmed, the color of the sample 1 was yellow. In addition, when the sample 1 was observed using a scanning electron microscope (SEM), an average length of the whiskers formed therein was approximately 30 $\mu$m, and the electrode thus obtained had a size of 1 cm $\times$ 1 cm, and a thickness of 0.1 mm.

(Example 2)

An electrode for an electricity storage device of this example was obtained by carrying out the similar operations to Example 1, except that the supply of argon gas was stopped when the temperature reached 1100 °C. Hereinafter, the electrode of this example is referred to as a "sample 2".

When the sample 2 was visually confirmed, the color of the sample 2 was purple. In addition, when the sample 2 was observed using the SEM, an average length of the whiskers formed therein was approximately 30 $\mu$m, and the electrode thus obtained had a size of 1 cm × 1 cm, and a thickness of 0.1 mm.

(Example 3)

An electrode for an electricity storage device of this example was obtained by carrying out the similar operations to Example 1, except that the supply of argon gas was stopped when the temperature reached 300 °C. Hereinafter, the electrode of this example is referred to as a "sample 3".

When the sample 3 was visually confirmed, the color of the sample 3 was greenish dark blue. In addition, when the sample 3 was observed using the SEM, an average length of the whiskers formed therein was approximately 30 $\mu$m, and the electrode thus obtained had a size of 1 cm × 1 cm, and a thickness of 0.1 mm.

(Example 4)

A tungsten metal flat plate as a substrate was placed in an electric furnace capable of controlling an atmosphere. Then, heating in the furnace was started in an atmospheric state. While pure argon was supplied thereto immediately after the start of heating, the temperature was increased to 1100 °C at a rate of temperature rise of 1100 °C/hour, and kept at 1100 °C for eight hours. In this case, a flow rate of pure argon was 300 cm$^3$/minute (1 atm, 25 °C). Thereafter, the furnace was naturally cooled to room temperature, thereby obtaining an electrode for an electricity storage device of this example. Hereinafter, the electrode of this example is referred to as a "sample 4".

When the sample 4 was visually confirmed, the color of the sample 4 was purple. In addition, when the sample 4 was observed using the SEM, an average length of the whiskers formed therein was approximately 30 $\mu$m, and the electrode thus obtained had a size of 1 cm × 1 cm, and a thickness of 0.1 mm.

(Example 5)

An electrode for an electricity storage device of this example was obtained by carrying out the similar operations to Example 4, except that the keeping time at 1100 °C was two hours. Hereinafter, the electrode of this example is referred to as a "sample 5".

When the sample 5 was visually confirmed, the color of the sample 5 was dark blue. In addition, when the sample 5 was observed using the SEM, an average length of the whiskers formed therein was approximately 30 $\mu$m, and the electrode thus obtained had a size of 1 cm × 1 cm, and a thickness of 0.1 mm.

(Evaluation of samples 1 to 5)

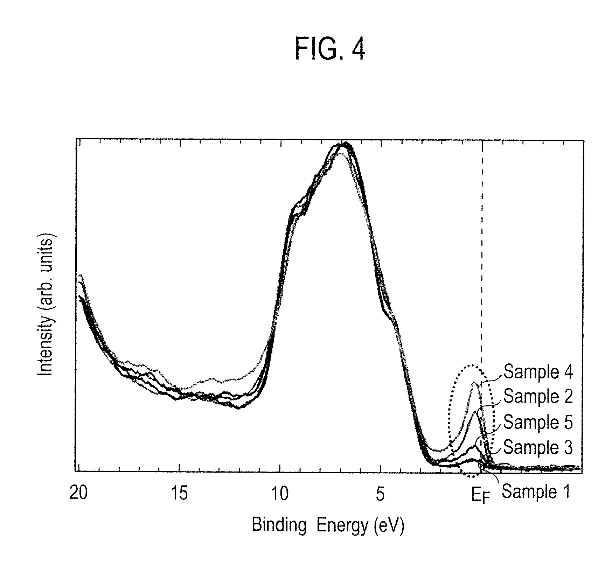

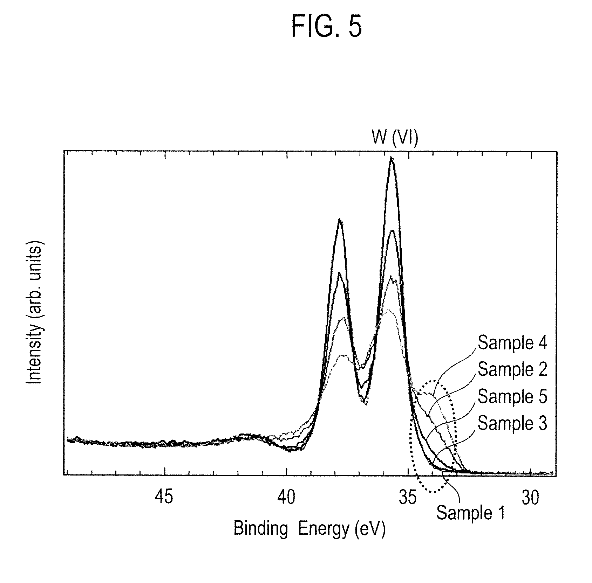

The respective samples 1 to 5 were subjected to an X-ray photoelectron spectroscopic analysis using an X-ray photoelectron spectroscopic analyzer (QUANTUM 2000, manufactured by ULVAC-PHI Inc.) to carry out X-ray photoelectron spectroscopy. Figs. 4 and 5 are, respectively, a graph showing a valence band photoelectron spectrum of the whisker surface and a graph showing a W4f photoelectron spectrum of the whisker surface of the respective examples 1 to 5.

The sample 1 and the sample 3, which were indicated by yellow and dark blue, each had only a slight peak confirmed adjacent to the Fermi level $E_f$. In addition, a peak adjacent to 34 eV was not confirmed in the sample 1 and the sample 3. On the other hand, the sample 5, which was indicated by the same dark blue, had a small peak confirmed adjacent to the Fermi level, and the sample 2 and the sample 4, which were indicated by purple, each had an obvious peak confirmed adjacent to the Fermi level.

In Fig. 4, the peak intensities adjacent to the Fermi level of the sample 1 and the sample 3 were 2/43 and 1/25, which were less than 1/20, with respect to the maximum peak intensity within the range of 5 to 10 eV. The peak intensity adjacent to the Fermi level of the sample 4 was 4/15, which was 1/5 or more, with respect to the maximum peak intensity within the range of 5 to 10 eV. In addition, the peak intensities adjacent to the Fermi level of the sample 2 and the sample 5 were 1/6 and 1/11, which were 1/20 or more, with respect to the maximum peak intensity within the range of 5 to 10 eV.

In Fig. 5, the intensity at 34 eV of each of the sample 1 and the sample 3 was 1/37, which was less than 1/20, with respect to the intensity at 36 eV. The intensity at 34 eV of the sample 4 was 5/11, which was 1/5 or more, with respect to the intensity at 36 eV. In addition, the intensities at 34 eV of the sample 2 and the sample 5 were 5/17 and 1/8, which were 1/20 or more, with respect to the intensity at 36 eV.

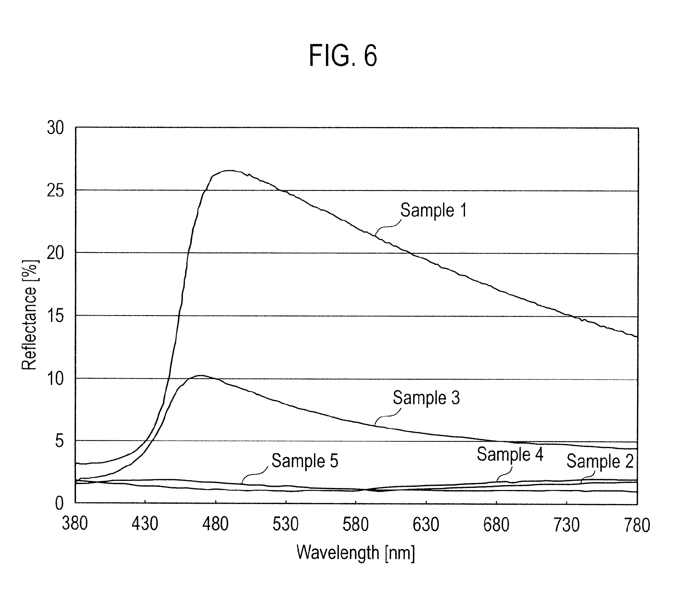

In addition, the respective samples 1 to 5 were subjected to a visible light spectroscopic analysis. More specifically, the respective samples were irradiated with light using a high stability xenon lamp with 150 W as a light source, and the reflected light was introduced into a spectroscope, so as to measure a reflectance spectrum. Fig. 6 is a graph showing a result (reflectance spectrum) according to a visible light spectroscopic analysis of the whiskers of the respective examples. The sample 1 indicated by yellow and the sample 3 indicated by dark blue had significant peaks. On the other hand, the other three samples did not have clearly distinguishable peaks confirmed in the graph.

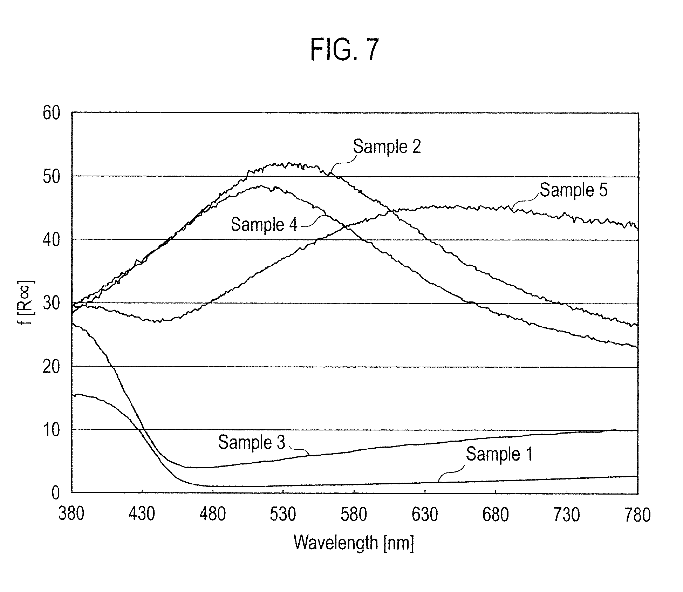

Fig. 7 is a graph showing a result (artificial transmission spectrum) obtained by a Kubelka-Munk (K-M) conversion of the reflectance spectrum of Fig. 6. According to this spectrum, the sample 2 and the sample 4 indicated by purple were confirmed to have maximum peaks within the range of 500 to 600 nm.

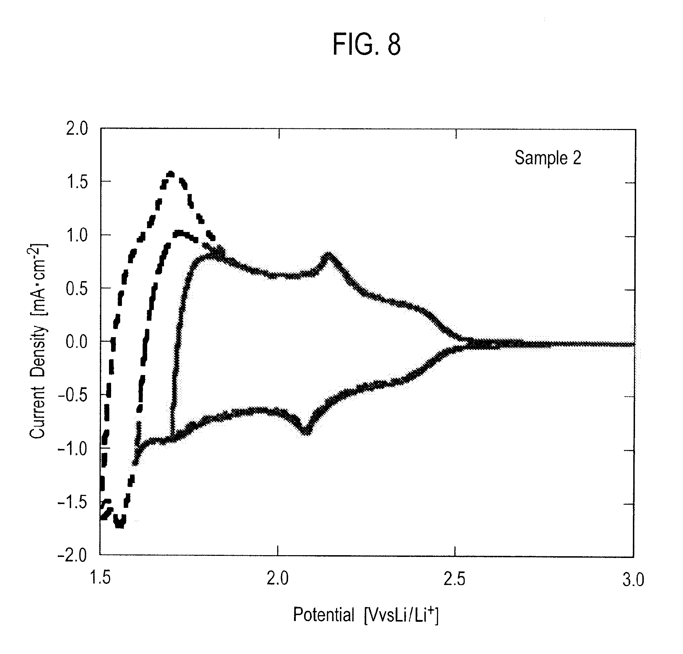

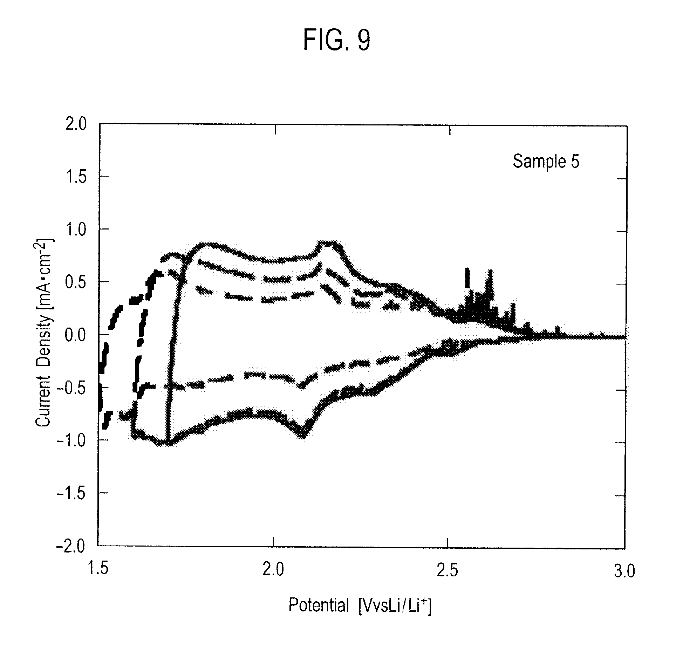

Next, the properties of the electrodes for an electricity storage device of Example 2 and Example 5 were evaluated by a charge and discharge test and cyclic voltammetry (CV). More specifically, by use of a tripolar cell in which the electrode for an electricity storage device of respective Example 2 and Example 5 was used as a test electrode and lithium foil was used as an auxiliary electrode and a reference electrode, the cyclic voltammetry (CV) was performed to measure. In this case, as an electrolyte liquid, a liquid obtained by dissolving lithium perchlorate at a rate of 1 mol/L in a solvent of a mixture of ethylene carbonate (EC):dimethyl carbonate (DMC) = 50:50 (volume ratio) was used. Fig. 8 and Fig. 9 show CV curves of the electrodes for an electricity storage device of Example 2 and Example 5, respectively.

It is confirmed that the electrode for an electricity storage device of Example 2 shows excellent cycle resistance performance. In addition, even when the voltage range is extended toward the lower potential side from 1.7 to 3.0 V to 1.5 to 3.0 V, the electrode of Example 2 can obtain a CV curve indicating no deterioration.

The electrode for an electricity storage device of Example 5 can also obtain a relatively stable CV curve when the voltage range is between 1.7 and 3.0 V. However, it is confirmed that slight deterioration is caused when the voltage range is extended toward the lower potential side of 1.5 to 3.0 V

(Example 6)

A tungsten metal flat plate as a substrate was placed in an electric furnace capable of controlling an atmosphere. While argon containing oxygen with a high concentration was allowed to flow into, the temperature was increased to 100 °C at a rate of temperature rise of 550 °C/hour. In this case, the oxygen concentration in the flow of argon containing oxygen was 1% by volume (10000 ppm by volume), and a flow rate was 15 cm$^3$/minute (1 atm, 25 °C).
Then, while argon gas containing oxygen with a low concentration was allowed to flow into, the temperature was increased to 1100 °C at a rate of temperature rise of 550 °C/hour, and kept at 1100 °C for two hours. In this case, the oxygen concentration in the flow of argon containing oxygen was 0.05% by volume (500 ppm by volume), and a flow rate was 15 cm$^3$/minute (1 atm, 25 °C). After keeping at 1100 °C for two hours, the current applied to the electric furnace was stopped, followed by cooling gradually. While cooling gradually, the supply of argon gas containing oxygen with a low concentration was stopped when the temperature reached 200 °C.
Thereafter, the furnace was naturally cooled to room temperature, thereby obtaining an electrode for an electricity storage device of this example. Hereinafter, the electrode of this example is referred to as a "sample 6".

When the sample 6 was visually confirmed, the color of the sample 6 was purple. In addition, when the sample 6 was observed using the SEM, an average length of the whiskers formed therein was approximately 30 μm, and the electrode thus obtained had a size of 1 cm × 1 cm, and a thickness of 0.1 mm.

(Example 7)

A tungsten metal flat plate as a substrate was placed in an electric furnace capable of controlling an atmosphere. While argon containing oxygen with a high concentration was allowed to flow into, the temperature was increased to 100 °C at a rate of temperature rise of 550 °C/hour. In this case, the oxygen concentration in the flow of argon containing oxygen was 1% by volume (10000 ppm by volume), and a flow rate was 15 cm$^3$/minute (1 atm, 25 °C).
Then, while argon gas containing oxygen with a low concentration was allowed to flow into, the temperature was increased to 1100 °C at a rate of temperature rise of 550 °C/hour, and kept at 1100 °C for two hours. In this case, the oxygen concentration in the flow of argon containing oxygen was 0.1°/a by volume (1000 ppm by volume), and a flow rate was 15 cm$^3$/minute (1 atm, 25 °C). After keeping at 1100 °C for two hours, the current applied to the electric furnace was stopped, followed by cooling gradually. While cooling gradually, the supply of argon gas containing oxygen with a low concentration was stopped when the temperature reached 200 °C.
Thereafter, the furnace was naturally cooled to room temperature, thereby obtaining an electrode for an electricity storage device of this example. Hereinafter, the electrode of this example is referred to as a "sample 7".

When the sample 7 was visually confirmed, the color of the sample 7 was purple. In addition, when the sample 7 was observed using the SEM, an average length of the whiskers formed therein was approximately 30 μm, and the electrode thus obtained had a size of 1 cm × 1 cm, and a thickness of 0.1 mm.

(Example 8)

A tungsten metal flat plate as a substrate was placed in an electric furnace capable of controlling an atmosphere. While argon containing oxygen with a high concentration was allowed to flow into, the temperature was increased to 100 °C at a rate of temperature rise of 550 °C/hour. In this case, the oxygen concentration in the flow of argon containing oxygen was 1% by volume (10000 ppm by volume), and a flow rate was 15 cm$^3$/minute (1 atm, 25 °C).

Then, while argon gas containing oxygen with a low concentration was allowed to flow into, the temperature was increased to 1100 °C at a rate of temperature rise of 550 °C/hour, and kept at 1100 °C for two hours. In this case, the oxygen concentration in the flow of argon containing oxygen was 0.4% by volume (4000 ppm by volume), and a flow rate was 15 cm$^3$/minute (1 atm, 25 °C). After keeping at 1100 °C for two hours, the current applied to the electric furnace was stopped, followed by cooling gradually. While cooling gradually, the supply of argon gas containing oxygen with a low concentration was stopped when the temperature reached 200 °C.

Thereafter, the furnace was naturally cooled to room temperature, thereby obtaining an electrode for an electricity storage device of this example. Hereinafter, the electrode of this example is referred to as a "sample 8".

When the sample 8 was visually confirmed, the color of the sample 8 was purple. In addition, when the sample 8 was observed using the SEM, an average length of the whiskers formed therein was approximately 30 μm, and the electrode thus obtained had a size of 1 cm × 1 cm, and a thickness of 0.1 mm.

(Example 9)

A tungsten metal flat plate as a substrate was placed in an electric furnace capable of controlling an atmosphere. While argon containing oxygen with a high concentration was allowed to flow into, the temperature was increased to 100 °C at a rate of temperature rise of 550 °C/hour. In this case, the oxygen concentration in the flow of argon containing oxygen was 1% by volume (10000 ppm by volume), and a flow rate was 15 cm$^3$/minute (1 atm, 25 °C.).

Then, while argon gas containing oxygen with a low concentration was allowed to flow into, the temperature was increased to 1100 °C at a rate of temperature rise of 550 °C/hour, and kept at 1100 °C for two hours. In this case, the oxygen concentration in the flow of argon containing oxygen was 0.6% by volume (6000 ppm by volume), and a flow rate was 15 cm$^3$/minute (1 atm, 25 °C.). After keeping at 1100 °C for two hours, the current applied to the electric furnace was stopped, followed by cooling gradually. While cooling gradually, the supply of argon gas containing oxygen with a low concentration was stopped when the temperature reached 200 °C.

Thereafter, the furnace was naturally cooled to room temperature, thereby obtaining an electrode for an electricity storage device of this example. Hereinafter, the electrode of this example is referred to as a "sample 9".

When the sample 9 was visually confirmed, the color of the sample 9 was dark blue. In addition, when the sample 9 was observed using the SEM, an average length of the whiskers formed therein was approximately 30 μm, and the electrode thus obtained had a size of 1 cm × 1 cm, and a thickness of 0.1 mm.

(Example 10)

A tungsten metal flat plate as a substrate was placed in an electric furnace capable of controlling an atmosphere. While argon containing oxygen with a high concentration was allowed to flow into, the temperature was increased to 100 °C at a rate of temperature rise of 550 °C/hour. In this case, the oxygen concentration in the flow of argon containing oxygen was 1% by volume (10000 ppm by volume), and a flow rate was 15 cm$^3$/minute (1 atm, 25 °C).

Then, while argon gas containing oxygen with a low concentration was allowed to flow into, the temperature was increased to 1100 °C at a rate of temperature rise of 550 °C/hour, and kept at 1100 °C for two hours. In this case, the oxygen concentration in the flow of argon containing oxygen was 0.8% by volume (8000 ppm by volume), and a flow rate was 15 cm$^3$/minute (1 atm, 25 °C). After keeping at 1100 °C for two hours, the current applied to the electric furnace was stopped, followed by cooling gradually. While cooling gradually, the supply of argon gas containing oxygen with a low concentration was stopped when the temperature reached 200 °C.

Thereafter, the furnace was naturally cooled to room temperature, thereby obtaining an electrode for an electricity storage device of this example. Hereinafter, the electrode of this example is referred to as a "sample 10".

When the sample 10 was visually confirmed, the color of the sample 10 was greenish dark blue. In addition, when the sample 10 was observed using the SEM, an average length of the whiskers formed therein was approximately 30 μm, and the electrode thus obtained had a size of 1 cm × 1 cm, and a thickness of 0.1 mm.

(Evaluation of samples 6 to 10)

The respective samples 6 to 10 were subjected to an X-ray photoelectron spectroscopic analysis using an X-ray photoelectron spectroscopic analyzer (QUANTUM 2000, manufactured by ULVAC-PHI Inc.) to carry out X-ray photoelectron spectroscopy.

After the X-ray photoelectron spectroscopic analysis, a bipolar cell using the electrode for an electricity storage device of respective Examples 6 to 10 as a test electrode and using lithium foil as an opposite electrode was manufactured. As an electrolyte liquid, a liquid obtained by dissolving lithium perchlorate at a rate of 1 mol/L in a solvent of a mixture of ethylene carbonate (EC):dimethyl carbonate (DMC) = 50:50 (volume ratio) was used. In addition, a glass filter paper was used as a separator.

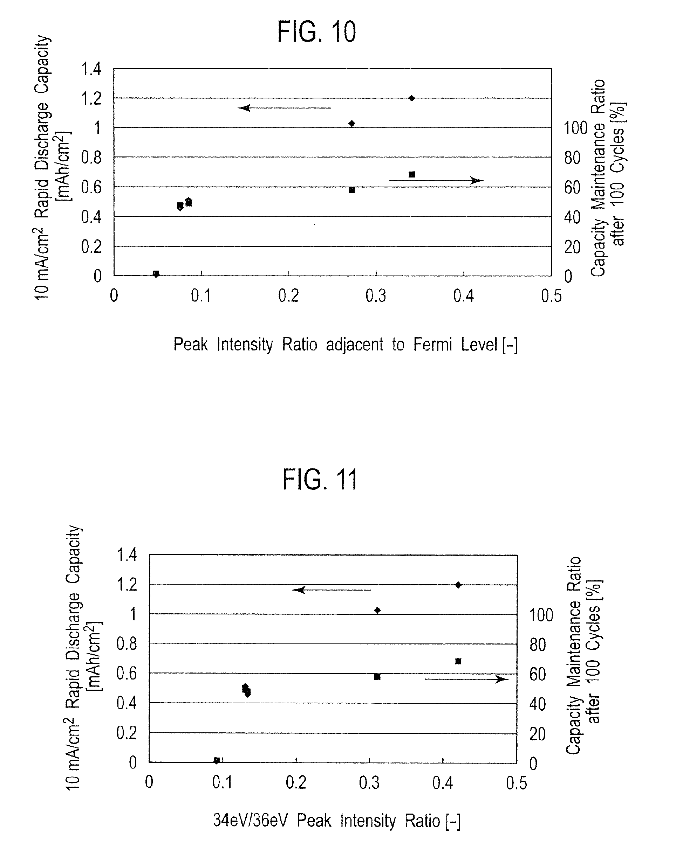

The cells using the electrodes for an electricity storage device of Examples 6 to 10 were subjected to charge and discharge in a range of 1.2 to 3 V. First, rapid charge and discharge at 10 mA/cm$^2$ was carried out twice, and a capacity of the second discharge was measured. Then, charge and discharge at 1 mA/cm$^2$ was repeated 100 times, and a capacity maintenance ratio after 100 cycles was measured. The results thus obtained are shown in Table 1 and Fig. 10 to Fig. 13.

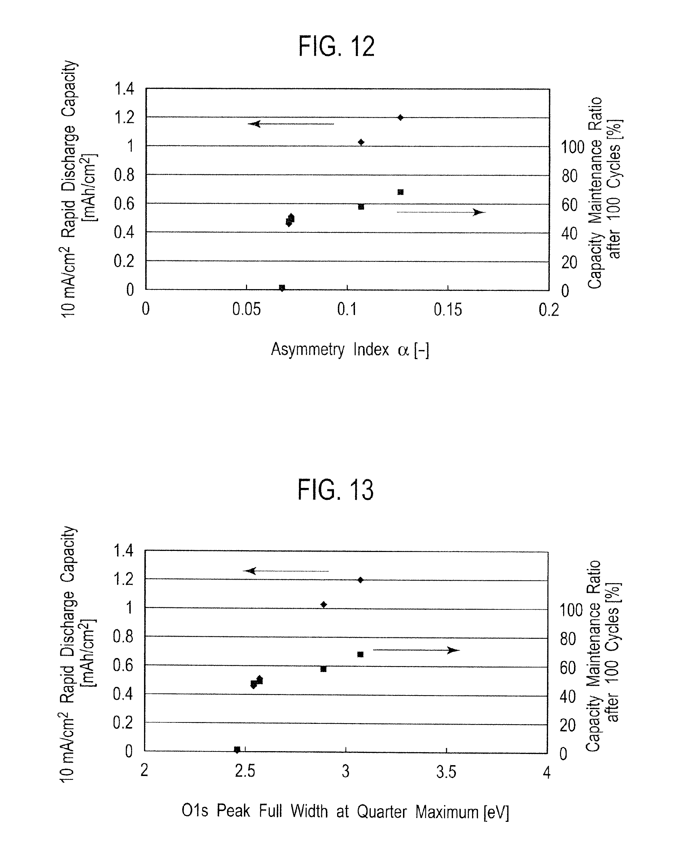

In Table 1 and Fig. 10, the peak intensity ratio adjacent to the Fermi level represents a ratio of a peak intensity within 1 eV from the Fermi level to a peak intensity within the range of 5 to 10 eV. In Table 1 and Fig. 11, a peak intensity ratio of 34 eV/36 eV represents a ratio of an intensity at 34 eV of a peak within the range of 33 to 34 eV to an intensity at 36 eV of a peak within the range of 35 to 36 eV. In Table 1 and Fig. 12, the asymmetry index $\alpha$ represents a parameter in a Doniach-Sunjic function. In Table 1 and Fig. 13, the full width at quarter maximum of the Ols peak represents a full width at quarter maximum under the peak within the range of 525 to 535 eV.

[Table 1]

| | Peak Intensity Ratio adjacent to Fermi Level (-) | 34 eV/36 eV Peak Intensity Ratio (-) | Asymmetry Index $\alpha$ (-) | O1s Peak Full Width at 1/4 Maximum (eV) | 10 mA/cm$^2$ Rapid Discharge Capacity (mAh/cm$^2$) | Capacity Maintenance Ratio after 100 Cycles (%) |
|---|---|---|---|---|---|---|
| Example 6 | 0.340 | 0.421 | 0.126 | 3.073 | 1.2 | 67 |
| Example 7 | 0.271 | 0.310 | 0,106 | 2.887 | 1.02 | 58 |
| Example 8 | 0.084 | 0.131 | 0.071 | 2.567 | 0.51 | 48 |
| Example 9 | 0.074 | 0,134 | 0.071 | 2.535 | 0.45 | 47 |
| Example 10 | 0.047 | 0.092 | 0.067 | 2.458 | 0.01 | 1 |

According to Table 1 and Fig. 10 to Fig. 13, it is recognized that Examples 6 to 9 particularly have excellent battery properties (rapid charge and discharge at 1 mA/cm$^2$ and discharge capacity maintenance ratio after 100 cycles) among Examples 6 to 10 that belong to the scope of the present invention.

The entire contents of Japanese Patent Application No. P2009-036617 (filed on February 19, 2009) and Japanese Patent Application No. P2009-157445 (filed on July 2, 2009) are herein incorporated by reference.

Although the present invention has been described above by reference to the embodiments and the examples, the present invention is not limited to those, and it will be apparent to these skilled in the art that various modifications and improvements can be made. For example, although the explanations have been made in the above-described examples in the case of applying the electrode for an electricity storage device to a lithium ion battery, the electrode for an electricity storage device may also be applied to an electrical double layer capacitor, an electrochemical capacitor, and other rechargeable electricity storage devices.

INDUSTRIAL APPLICABILITY

The electrode for an electricity storage device according to the present invention includes a porous layer formed from fibers and/or whiskers containing tungsten oxide as a main component having a predetermined peak in a valence band photoelectron spectrum obtained by an X-ray photoelectron spectroscopic analysis. Accordingly, the electrode for an electricity storage device capable of achieving excellent performance of cycle endurance, and the electricity storage device can be provided.

REFERENCE SIGNS LIST

1     Porous layer
1a    Fiber, whisker
2     Substrate
3     Metal layer
4     Core member
5     Separator
6     Positive electrode
7     Negative electrode
8     Casing body

**Claims**

1. An electrode for an electricity storage device, comprising:

   a porous layer having either fibers or whiskers containing tungsten oxide,
   wherein a valence band photoelectron spectrum of the fibers or whiskers obtained by an X-ray photoelectron spectroscopic analysis has a peak within 1 eV from a Fermi level of tungsten oxide.

2. The electrode for an electricity storage device according to claim 1, wherein a rising edge of the peak of the valence band photoelectron spectrum of the fibers or whiskers obtained by the X-ray photoelectron spectroscopic analysis is started before the Fermi level of tungsten oxide, and an intensity of the peak within 1 eV is 1/20 or more with respect to an intensity of a peak within a range of 5 to 10 eV.

3. The electrode for an electricity storage device according to claim 1 or 2. wherein a W4f photoelectron spectrum of the fibers or whiskers obtained by the X-ray photoelectron spectroscopic analysis has each peak within a range of 33 to 34 eV and within a range of 35 to 36 eV.

4. The electrode for an electricity storage device according to claim 3, wherein an intensity at 34 eV of the peak within the range of 33 to 34 eV is 1/20 or more with respect to an intensity at 36 eV of the peak within the range of 35 to 36 eV.

5. The electrode for an electricity storage device according to claim 4, wherein the intensity at 34 eV of the peak within the range of 33 to 34 eV is 1/10 or more with respect to the intensity at 36 eV of the peak within the range of 35 to 36 eV.

6. The electrode for an electricity storage device according to any one of claims 1 to 5, wherein a spectrum of the fibers or whiskers obtained by a Kubelka-Munk conversion of a reflectance spectrum by a visible light spectroscopic analysis has a maximum peak within a range of 500 to 600 nm.

7. The electrode for an electricity storage device according to any one of claims 1 to 6, wherein when a peak of the fibers or whiskers within a range of 525 to 535 eV obtained by the X-ray photoelectron spectroscopic analysis is subjected to a least squares approximation using a Doniach-Sunjic function, an asymmetry index $\alpha$ is 0.07 or more.

8. The electrode for an electricity storage device according to any one of claims 1 to 7, wherein a full width at quarter maximum under the peak of the fibers or whiskers within the range of 525 to 535 eV obtained by the X-ray photoelectron spectroscopic analysis is within a range of 2.5 to 4.0 eV.

9. The electrode for an electricity storage device according to any one of claims 1 to 8, wherein the porous layer is formed on a substrate of metal or ceramics containing tungsten.

10. The electrode for an electricity storage device according to any one of claims 1 to 8, wherein the porous layer is formed on a substrate including a metal layer formed on a surface thereof containing constituent metal of the fibers or whiskers.

11. An electricity storage device comprising the electrode for an electricity storage device according to any one of claims 1 to 10 and an electrolyte.

12. The electricity storage device according to claim 11. wherein the electrolyte is a non-aqueous electrolysis solution.

13. The electricity storage device according to claim 11, wherein the electrolyte is a solid or gelled body.

14. A method for manufacturing the electrode for an electricity storage device according to any one of claims 1 to 10, comprising:

heating a raw material or a substrate raw material including constituent metal of the fibers or whiskers in the presence of a small amount of oxygen so as to form either fibers or whiskers containing tungsten oxide.

**Amended claims under Art. 19.1 PCT**

1. (Amended) An electrode for an electricity storage device, comprising:

a porous layer having either fibers or whiskers containing tungsten oxide, wherein a valence band photoelectron spectrum of the fibers or whiskers obtained by an X-ray photoelectron spectroscopic analysis has a peak within 1 eV from a Fermi level of tungsten oxide, and a rising edge of the peak of the valence band photoelectron spectrum of the fibers or whiskers obtained by the X-ray photoelectron spectroscopic analysis is started before the Fermi level of tungsten oxide, and an intensity of the peak within 1 eV is 1/20 or more with respect to an intensity of a peak within a range of 5 to 10 eV.

2. (Cancelled)

3. (Amended) The electrode for an electricity storage device according to claim 1, wherein a W4f photoelectron spectrum of the fibers or whiskers obtained by the X-ray photoelectron spectroscopic analysis has each peak within a range of 33 to 34 eV and within a range of 35 to 36 eV.

4. The electrode for an electricity storage device according to claim 3, wherein an intensity at 34 eV of the peak within the range of 33 to 34 eV is 1/20 or more with respect to an intensity at 36 eV of the peak within the range of 35 to 36 eV.

5. The electrode for an electricity storage device according to claim 4. wherein the intensity at 34 eV of the peak within the range of 33 to 34 eV is 1/10 or more with respect to the intensity at 36 eV of the peak within the range of 35 to 36 eV.

6. (Amended) The electrode for an electricity storage device according to any one of claims 1 and 3 to 5, wherein a spectrum of the fibers or whiskers obtained by a Kubelka-Munk conversion of a reflectance spectrum by a visible light spectroscopic analysis has a maximum peak within a range of 500 to 600 nm.

7. (Amended) The electrode for an electricity storage device according to any one of claims 1 and 3 to 6, wherein when a peak of the fibers or whiskers within a range of 525 to 535 eV obtained by the X-ray photoelectron spectroscopic analysis is subjected to a least squares approximation using a Doniach-Sunjic function, an asymmetry index $\alpha$ is 0.07 or more.

8. (Amended) The electrode for an electricity storage device according to any one of claims 1 and 3 to 7, wherein a full width at quarter maximum under the peak of the fibers or whiskers within the range of 525 to 535 eV obtained by the X-ray photoelectron spectroscopic analysis is within a range of 2.5 to 4.0 eV.

9. (Amended) The electrode for an electricity storage device according to any one of claims 1 and 3 to 8, wherein the porous layer is formed on a substrate of metal or ceramics containing tungsten.

10. (Amended) The electrode for an electricity storage device according to any one of claims 1 and 3 to 8, wherein the porous layer is formed on a substrate including a metal layer formed on a surface thereof containing constituent metal of the fibers or whiskers.

11. (Amended) An electricity storage device comprising the electrode for an electricity storage device according to any one of claims 1 and 3 to 10 and an electrolyte.

12. The electricity storage device according to claim 11, wherein the electrolyte is a non-aqueous electrolysis solution.

**13.** The electricity storage device according to claim 11, wherein the electrolyte is a solid or gelled body.

**14.** (Cancelled)

FIG. 1

(a)

(b)

FIG. 2

# FIG. 3

# FIG. 4

# FIG. 5

# FIG. 6

# FIG. 7

FIG. 8

FIG. 9

## FIG. 10

## FIG. 11

## FIG. 12

## FIG. 13

<table>
<tr><td colspan="2" align="center">**INTERNATIONAL SEARCH REPORT**</td><td colspan="2">International application No.<br>PCT/JP2010/052536</td></tr>
</table>

| A. CLASSIFICATION OF SUBJECT MATTER |
|---|
| *H01M4/13*(2010.01)i, *H01M4/139*(2010.01)i, *H01M4/48*(2010.01)i, *H01M4/66* (2006.01)i, *H01M10/0562*(2010.01)i, *H01M10/0565*(2010.01)i, *H01M10/0566* (2010.01)i |
| According to International Patent Classification (IPC) or to both national classification and IPC |

| B. FIELDS SEARCHED |
|---|
| Minimum documentation searched (classification system followed by classification symbols)<br>H01M4/13, H01M4/139, H01M4/48, H01M4/66, H01M10/0562, H01M10/0565, H01M10/0566 |
| Documentation searched other than minimum documentation to the extent that such documents are included in the fields searched<br>　Jitsuyo Shinan Koho　　　　　1922–1996　Jitsuyo Shinan Toroku Koho　1996–2010<br>　Kokai Jitsuyo Shinan Koho　1971–2010　Toroku Jitsuyo Shinan Koho　1994–2010 |
| Electronic data base consulted during the international search (name of data base and, where practicable, search terms used) |

| C. DOCUMENTS CONSIDERED TO BE RELEVANT | | |
|---|---|---|
| Category* | Citation of document, with indication, where appropriate, of the relevant passages | Relevant to claim No. |
| X<br>Y | WO 2008/035627 A1  (Nissan Motor Co., Ltd.),<br>27 March 2008 (27.03.2008),<br>entire text; fig. 5<br>& JP 2008-103684 A　　& US 2009/0268371 A<br>& EP 2077568 A1　　　& CN 101517677 A | 1,9-12,14<br>13 |
| X<br>Y | JP 2008-103684 A  (Nissan Motor Co., Ltd.),<br>01 May 2008 (01.05.2008),<br>entire text; fig. 4<br>& US 2009/0268371 A　　& EP 2077568 A1<br>& WO 2008/035627 A1　　& CN 101517677 A | 1,9-12,14<br>13 |
| X | JP 2008-181763 A  (Nissan Motor Co., Ltd.),<br>07 August 2008 (07.08.2008),<br>entire text<br>(Family: none) | 1,3,9-14 |

☒ Further documents are listed in the continuation of Box C. ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>　30 April, 2010 (30.04.10) | Date of mailing of the international search report<br>　18 May, 2010 (18.05.10) |
|---|---|
| Name and mailing address of the ISA/<br>　Japanese Patent Office | Authorized officer |
| Facsimile No. | Telephone No. |

Form PCT/ISA/210 (second sheet) (July 2009)

**INTERNATIONAL SEARCH REPORT**

| | International application No. |
|---|---|
| | PCT/JP2010/052536 |

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2006-164689 A  (Enerstruct, Inc.), 22 June 2006 (22.06.2006), paragraphs [0006], [0021] (Family: none) | 13 |
| Y | JP 2008-117905 A  (GS Yuasa Corp.), 22 May 2008 (22.05.2008), paragraph [0042] (Family: none) | 13 |
| Y | JP 2005-51123 A  (TDK Corp.), 24 February 2005 (24.02.2005), claim 8; paragraph [0046] & US 2005/0058907 A1    & KR 10-2005-0014743 A & CN 1585159 A | 13 |
| A | JP 2005-101141 A  (Renesas Technology Corp.), 14 April 2005 (14.04.2005), paragraphs [0041], [0046] & US 2005/0073051 A1    & KR 10-2005-0030097 A | 2,4-8 |
| P,A | JP 2009-114591 A  (Nissan Motor Co., Ltd.), 28 May 2009 (28.05.2009), entire text (Family: none) | 1-14 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008103684 A
- JP P2009036617 B
- JP P2009157445 B